# EUROPEAN PATENT SPECIFICATION

(11) **EP 3 444 459 B1**
(45) Date of publication and mention of the grant of the patent: **22.01.2020**
(21) Application number: 18187930.5
(22) Date of filing: 08.08.2018
(51) Int. Cl.: F01N 3/30, F01N 9/00, F01N 3/021, F01N 3/025, F01N 3/035

(54) **EXHAUST GAS TREATMENT SYSTEM FOR DIESEL ENGINE**
ABGASBEHANDLUNGSSYSTEM FÜR DIESELMOTOR
SYSTÈME DE TRAITEMENT DE GAZ D'ÉCHAPPEMENT POUR MOTEUR DIESEL

(30) Priority: 17.08.2017 CN 201710704211
(43) Date of publication of application: 20.02.2019
(73) Proprietor: Guizhou Huangdi Diesel Engine Cleaner Co., Ltd., 556000 Guizhou Guizhou (CN)
(72) Inventor: Huang, Limin, Kaili, Guizhou 556000 (CN); Huang, Lijin, Kaili, Guizhou 556000 (CN); Huang, Huibo, Kaili, Guizhou 556000 (CN); Mao, Xin, Kaili, Guizhou 556000 (CN)
(74) Representative: Epping - Hermann - Fischer

(56) References cited:
- WO-A1-2007/037652
- WO-A2-2006/138174
- CN-B- 103 104 321
- JP-U- S5 954 707
- US-A- 4 538 413

## Description

### FIELD

The present application relates to the technical field of exhaust gas after-treatment for diesel vehicles. Specifically, the present application relates to an exhaust gas treatment system for heating and filtering exhaust gas of a diesel vehicle and regenerating a particulate filter used in the system and a regeneration method of the exhaust gas treatment system.

### BACKGROUND

With the implementation of Euro V emission standard, a diesel particulate filter (DPF) has become an indispensable technology for diesel vehicles. In recent years, with the increase of motor vehicle ownership, vehicle emissions have gradually become the main source of air pollution in China's big cities. In the sources of particulate matters with a particulate diameter not more than 2.5 µm (referred to PM2.5) in atmospheric air of Beijing, the share ratio of vehicle exhaust emissions is as high as 22%. Moreover, particulates exhausted from vehicles mainly come from diesel vehicles. With the China's diesel vehicle emission control regulations become increasingly strict in recent years, the application of DPF will have a wide market prospect.

In diesel engines, the combustion of diesel fuel is realized by self-ignition of different air-fuel mixtures. If the combustion is incomplete, particulates are produced due to oxygen deficiency. The particulates mainly include carbon (carbon black), sulfates and incompletely combusted hydrocarbons. In order to filter out these particulates, a diesel particulate filter has been disclosed in the conventional technology.

When the diesel particulate filter is used, an exhaust backpressure normally rises due to a rising load of the filter. Since engine manufacturers do not allow the exhaust backpressure to exceed an allowable value and do not expect maintenance costs resulting from filter evacuation, passive or active regeneration of the filter is necessary.

In general, an active diesel particulate filter system includes an electrical regeneration system or a combustor support system, and the regeneration can be triggered manually, or the triggering of the regeneration can also be controlled in an open loop mode or a closed loop mode by monitoring the exhaust backpressure.

In the conventional technology, the combustor is normally designed to have an ejector with a small opening, so as to atomize fuel in a combustion chamber, and the fuel is mixed with the air required for combustion in the combustion chamber. A defect of such design is that carbon may be quickly deposited on the tiny atomizing opening of a nozzle due to combustion residues, which disturbs the operation of the combustor. For example, combustion residues may be formed when the combustor is closed.

In addition, the currently designed combustor has a relatively complicated structure, thus not only the manufacturing process is troublesome and costly, but also problems may easily arise during operation, as mentioned in Chinese Patent Application No. CN 201310019585.7. Furthermore, there're also some combustors which can only be regenerated when the vehicle is parked or in idle, while cannot be regenerated when the vehicle is accelerating or running at a high speed, as mentioned in Chinese Patent Application No. CN 200780021783.1.

Therefore, an exhaust gas treatment system is still required in this field, which can heat exhaust gas from diesel engines to a regeneration temperature of the diesel particulate filter and can realize particulate filter regeneration when the vehicle is running at a high speed or even is accelerated.

JPS5954707U discloses an exhaust particulate after-treatment apparatus comprising: a trap for trapping particulates in exhaust in an air passage, an exhaust heating burner, an ignition device and a cooling air passage provided in a layer outside the heat generating portion of the ignition device.

US4538413A discloses an exhaust passage extending from an internal combustion engine to conduct exhaust from the engine, a filter disposed in the exhaust passage to catch particles in the exhaust, a burner disposed in the exhaust passage at a position upstream of the filter, and a burner receiving a mixture of air and fuel and burning the mixture to burn off the particles deposited on the filter.

WO2007/037652A1 discloses a heating device for exhaust gas in an
internal-combustion engine comprising a catalyst reactor reformer, an exhaust gas suction section and the second fuel supply device. When the heating device is driven, air and fuels are supplied to the catalyst reactor and the second fuel supply device via a single tube when the heating device is heated.

### SUMMARY

In order to achieve the above objects, a structure is provided according to the present application, which employs simple structures to achieve fuel oil combustion and exhaust gas heating. This structure utilizes the principle of eccentric air admission to allow the introduced fresh air to form a vortex in a combustion chamber, such that the fresh air can be fully mixed with fuel gas, to improve combustion efficiency. Then, flames produced by the combustion is directly introduced into a mixing chamber of a particulate filter to be fully mixed with the exhaust gas from an exhaust pipe, thereby increasing the exhaust gas temperature and realizing the regeneration of the particulate filter.

In view of this, an exhaust gas treatment system for a diesel engine is provided according to the present application. The exhaust gas treatment system can quickly heat and ignite the diesel and the introduced fresh air under various complex working conditions, especially under a low temperature condition, so as to quickly heat up the exhaust gas to a temperature required for the particulate filter regeneration, so that the carbon particulates accumulated in the particulate filter can be quickly cleared through combustion in a short time, and the object of real-time online regeneration is realized.

An exhaust gas treatment system for a diesel engine is provided according to a first aspect of the present application. The exhaust gas treatment system includes: a low temperature heater arranged downstream of an exhaust pipe of the diesel engine, and a particulate filter connected to the low temperature heater and configured to capture particulate matters from engine exhaust. The low temperature heater includes a tubular shell, having an inlet end and an outlet end, and the inlet end being in communication with the exhaust pipe of the diesel engine; an ignition portion arranged on a sidewall of the shell near the inlet end, and an oil inlet being arranged at a center of the ignition portion; an ignition cylinder connected to the ignition portion and in communication with the ignition portion, the ignition cylinder having an open end and a closed end, the closed end being near the inlet end of the tubular shell and the open end being near the outlet end of the tubular shell; and an air intake pipe which passes through the tubular shell and a sidewall of the ignition cylinder and enters the ignition cylinder. The intake pipe has a first air outlet and a second air outlet, the first air outlet is directly inside the ignition cylinder, the second air outlet is in communication with the ignition portion, and the ignition portion is located between the first air outlet and the closed end. The exhaust gas treatment system according to the present application not only can perform real-time online regeneration on the particulate filter, that is the DPF, accumulated with soot, when the vehicle is parked or idling, but also can perform real-time online regeneration on the particulate filter, that is the DPF, accumulated with soot, when the vehicle is traveling at a high speed or is accelerating. Further, more importantly, compared with the conventional exhaust gas treatment system, the time required for the online regeneration of DPF of the exhaust gas treatment system is greatly reduced, and may even only be a half of the regeneration time of the conventional exhaust gas treatment system.

In the exhaust gas treatment system according to the invention, the first air outlet is inserted into the ignition cylinder in an eccentric manner. By arranging the air outlet in this way, fresh air from a compressor can form a swirling vortex in the combustion chamber, which enhances the gas flow turbulence in the combustion chamber, facilitates the complete combustion of the fuel oil and quick transferring of the heat generated by combustion to the engine exhaust gas.

In the exhaust gas treatment system according to the first aspect, a flow divider is further arranged between an outer wall of the ignition cylinder and the tubular shell, and an annular portion of the flow divider is cut equidistantly to form multiple rectangular or trapezoidal notches and outwardly curved fin-shaped portions.

In the exhaust gas treatment system according to the first aspect, the fin-shaped portions bend toward the outlet end of the tubular shell, and are at an angle of 10 to 90 degrees with respect to a plane on which the annular portion of the flow divider lies, and the angle is preferable to be 10 degrees, 15 degrees, 20 degrees, 25 degrees, 30 degrees, 35 degrees, 40 degrees, 45 degrees, 50 degrees, 55 degrees, 60 degrees, 65 degrees, 70 degrees, 75 degrees, 80 degrees or 85 degrees.

In the exhaust gas treatment system according to the first aspect, in front of the flow divider, a tapered flow converging hood is arranged on an inner wall of the tubular shell, and the flow converging hood extends toward the outlet end and has a gradually decreasing diameter.

In the exhaust gas treatment system according to the first aspect, an angle formed between a sidewall of the flow converging hood and a sidewall of the tubular shell ranges from 10 degrees to 50 degrees, and is preferable to be 10 degrees, 15 degrees, 20 degrees, 25 degrees, 30 degrees, 35 degrees, 40 degrees, 45 degrees or 50 degrees.

In the exhaust gas treatment system according to the first aspect, the low temperature heater is in communication with a housing for mounting the particulate filter, the housing includes the particulate filter located at a rear part and a mixing chamber located at a front part, the outlet end of the tubular shell is inserted into the mixing chamber; and the exhaust pipe of the diesel engine is inserted into the mixing chamber in an eccentric manner.

In the exhaust gas treatment system according to the first aspect, an oxidation catalyst is arranged between the low temperature heater and the particulate filter, and is configured to remove hydrocarbons and a part of particulates from the exhaust gas.

In the exhaust gas treatment system according to the first aspect, a wall-flow honeycomb ceramic filter or the oxidation catalyst is made of cordierite, silicon carbide or recrystallized silicon carbide.

According to a second aspect of the present application, a method for regenerating an exhaust gas treatment system arranged on an exhaust pipe of a diesel engine is provided, wherein the exhaust gas treatment system is the exhaust gas treatment system according to the first aspect. The method includes the following steps:
monitoring a differential pressure between two ends of the particulate filter in real time by pressure sensors mounted at the two ends of the particulate filter, and starting a regeneration procedure when a value of the differential pressure reaches a predetermined regeneration threshold value;
injecting fuel oil into an oil storage inner sleeve, then turning on a preheating rod for preheating; and when a predetermined preheating time lapses, feeding fresh air into the air intake pipe and energizing a ceramic ignition plug at the same time, to ignite a fuel-air spray formed by the fresh air and the fuel oil, to heat the exhaust gas;
monitoring an exhaust temperature at the inlet of the particulate filter in real time by temperature sensors mounted at the two ends of the particulate filter, controlling a fuel injection amount in a fuzzy prediction mode, and in a case that the exhaust temperature does not reach a predetermined regeneration temperature of the particulate filter, increasing the fuel injection amount; and
in a case that the differential pressure between the two ends of the particulate filter is reduced to a predetermined threshold value for regeneration termination, stopping preheating, stopping feeding fresh air and fuel oil, and then de-energizing the ceramic ignition plug.

Compared with the conventional technology, the exhaust gas treatment system according to the present application can ignite stably and regenerate the blocked DPF evenly when the vehicle is accelerating or even travelling at a high speed, instead, in the conventional technology, stable ignition and regeneration of the rear-mounted DPF can only be realized when the vehicle is parked or idling. Without being restricted to any theories, the reason may be that flames produced in this manner are forcefully pushed into the exhaust gas, the flames are pushed more powerfully, thus cannot be blown out even when the exhaust gas speed is fast or getting faster, so that the stable ignition and regeneration can be realized.

### BRIEF DESCRIPTION OF THE DRAWINGS

The present application will be described hereinafter with reference to the drawings. It should be understood that, the drawings are only examples used to explain and illustrate principles of the present application and are not intended to limit the present application to the specific solutions shown in the drawings. In the drawings:
Figure 1 is a schematic view showing an exhaust gas treatment system for diesel engines according to an embodiment of the present application;
Figure 2 is a schematic view showing a low temperature heater of the exhaust gas treatment system according to an embodiment of the present application;
Figure 3 is a schematic view showing a gas flow path according to the low temperature heater in Figure 2;
Figure 4 is a schematic view showing the operating principle of a wall-flow honeycomb ceramic filter according to an embodiment of the present application; and
Figure 5 is a schematic view showing the operating principle of an oxidation catalyst according to an embodiment of the present application.

**Reference Numerals in the Figures:**

| | | | |
|---|---|---|---|
| 100 | exhaust gas treatment system, | 101 | exhaust gas inlet pipe, |
| 102 | low temperature heater, | 103 | turbulator, |
| 104 | oxidation catalyst, | 105 | particulate filter, |
| 106 | exhaust gas outlet pipe, | 107 | pressure sensor, |
| 108 | temperature sensor. | | |

### DETAILED DESCRIPTION

The exhaust gas treatment system according to the present application will be described hereinafter in detail with reference to the drawings. However, it should be understood by those skilled in the art that, the embodiments hereinafter are only used to allow those skilled in the art to better understand the present application, and are not intended to limit the present application. The scope of the present application is defined by the claims.

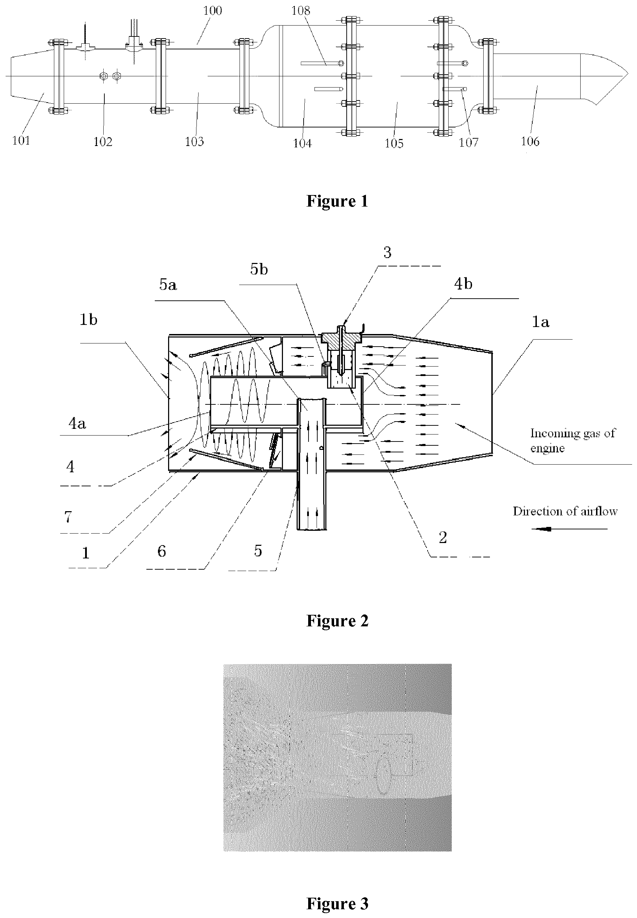

Figure 1 is a schematic view showing an exhaust gas treatment system 100 according to an embodiment of the present application. The exhaust gas treatment system 100 is installed downstream of an exhaust pipe of a diesel engine, which is used for the treatment of the exhaust gas from the exhaust pipe to remove the nitrogen oxide and most of particulate matters therein, for example, more than 95% of the particulate matters. Unlike most present conventional treatment systems that regenerate the diesel particulate filter (DPF) only by injecting fuel oil to enhance combustion, the exhaust gas treatment system 100 according to the present application ignites a fuel-air mixture and utilizes the heat generated in combustion to increase the exhaust gas temperature of the diesel engine, so as to realize the reliable combustion and regeneration of the DPF under various operating conditions, especially in harsh environments, even when the exhaust gas treatment system 100 according to the present application is used under an operation condition of extreme temperatures, the above effects can also be realized.

Referring to Figure 1, the exhaust gas treatment system 100 includes an exhaust gas inlet pipe 101 connected to the exhaust pipe of the diesel engine, a low temperature heater 102 connected to the exhaust gas inlet pipe 101, a turbulator 103 connected to the low temperature heater 102, an oxidation catalyst 104 connected to the turbulator 103, a particulate filter 105 connected to the oxidation catalyst 104 and an exhaust gas outlet pipe 106 connected to the particulate filter 105. Of course, in the exhaust gas treatment system 100 shown in Figure 1, the turbulator 103 and the oxidation catalyst 104 may also be omitted. The turbulator 103 is used to facilitate fully mix and temperature increase of the exhaust gas, but is not necessary. By adding the oxidation catalyst 104, a coated catalyst inside the oxidation catalyst 104 can oxidize NO into NO₂ and remove a part of soluble organics, so as to further increase the exhaust gas temperature. However, the oxidation catalyst 104 is not necessary either, and under conditions that the low temperature heater 102 has a good temperature increasing effect, the exhaust gas temperature can be increased directly to the required temperature for regeneration, so as to remove the carbon particulates accumulated in the DPF completely and thoroughly.

In an embodiment, shells of these parts are all made of steelwork, preferably stainless steel material. This keeps the surfaces of these parts clean and bright and reduces the dust accumulation and corrosion. In another embodiment, these parts are connected by flanges. This facilitates the installation, disassembly and replacement of these parts. Of course, these parts can also be connected in other connection manners well-known to those skilled in the art, such as welding and the like.

The exhaust gas inlet pipe 101 is connected to the exhaust pipe port (not shown) of the diesel engine for receiving the exhaust gas. In a preferable embodiment, the exhaust gas inlet pipe 101 is in a tapered shape with a gradually varying diameter, that is, an end of the exhaust gas inlet pipe 101 connected to the exhaust pipe is smaller than an end of the exhaust gas inlet pipe 101 connected to the low temperature heater 102, as shown in Figure 1. In this way, when the exhaust gas enters the low temperature heater 102, both a pressure and a flow velocity become small, which allows the exhaust gas has a long contact time with the hot gas flow generated in the low temperature heater 102, therefore the exhaust gas can be more fully heated. Such an arrangement also reduces a resistance of the low temperature heater 102 to the exhaust gas. Other parts of the exhaust gas treatment system 100 shown in Figure 1 will be described in detail hereinafter with reference to Figure 2 and Figure 3.

The low temperature heater is an important part of the exhaust gas treatment system 100. In an embodiment, the low temperature heater receives and combusts the fuel from an oil intake pipe and the fresh air from an air intake pipe. The fuel may come from the engine, such as diesel oil; or, the fuel may also be a liquid or gaseous fuel, such as propane, ethyl alcohol and the like.

The low temperature heater can be configured to have a heat transfer relationship with the exhaust gas from the exhaust pipe of the engine. For example, the low temperature heater can be directly connected in a flow path of the exhaust gas to heat the exhaust gas, flowing into the shell, to a relative high temperature that can improve the efficiency of the oxidation catalyst 104 (DOC) arranged downstream of the low temperature heater and allow the regeneration of the particulate filter 105 (DPF) arranged further downstream. As an alternative solution, the low temperature heater may also be used to preheat an exhausting system before the engine is started, so as to improve the efficiency of the exhausting system when the engine is started, thereby reducing the cold start emissions.

A combustor according to an embodiment of the present application is shown in Figure 2, that is, the low temperature heater for increasing the exhaust gas temperature of the engine. The low temperature heater is installed at a tail end of the exhaust pipe of the engine of a vehicle (especially a diesel vehicle) to provide heat by combustion, thereby increasing the exhaust gas temperature of the engine and realize the regeneration of the particulate filter.

In the embodiment shown in Figure 2, the low temperature heater includes a tubular shell 1 having an inlet end 1a and an outlet end 1b, and the inlet end 1a being in communication with the exhaust pipe of the engine; an ignition portion 2 arranged on a sidewall of the shell 1 near the inlet end 1a, and an oil inlet 3 being arranged at a center of the ignition portion 2; an ignition cylinder 4 connected to the ignition portion 2 and in communication with the ignition portion 2, the ignition cylinder 4 having an open end 4a near the outlet end 1b of the tubular shell 1 and a closed end 4b near the inlet end 1a of the tubular shell 1; and an air intake pipe 5 which passes through the tubular shell 1 and the sidewall of the ignition cylinder 4 and enters into the ignition cylinder 4. The intake pipe 5 has a first air outlet 5a and a second air outlet 5b, the first air outlet 5a is directly within the ignition cylinder 4, the second air outlet 5b is in communication with the ignition portion 2, and the ignition portion 2 is located between the first air outlet 5a and the closed end 4b.

An ignition plug is mounted on the combustion chamber through a tubular mounting seat. The ignition plug is near the closed end of the combustion chamber and is configured to ignite a mixture of fuel oil and air in the combustion chamber. In an embodiment, the fuel oil is sprayed into the combustion chamber through a tube at the center of the ignition plug, and is ignited by the ignition plug. In other embodiments, the ignition plug may also be a conventional electronic ignition plug, such as an electronic ignition plug conventionally used in diesel engines. Of course, the ignition plug may also be a high temperature ceramic ignition rod, such as an ignition rod which is made of a silicon nitride rod body and a heating filament like a tungsten filament arranged in the rod body.

The ignition cylinder 4 is of a tubular shape, including a closed end 4b and an open end 4a. The open end 4a faces an exhausting direction of the diesel engine, and is configured
to output a hot gas flow generated by combustion. The closed end 4b is configured to rebound the generated hot gas flow toward the open end and prevent the generated hot gas flow from flowing toward an opposite direction of the exhaust direction, so as to improve heat efficiency. In an embodiment, the ignition cylinder is made of heat resistant metal such as stainless steel.

According to the invention, the first air outlet 5a of the air intake pipe 5 is inserted into the ignition cylinder 4 in an eccentric manner. The eccentric manner refers to that a center line of the first air outlet 5a is not aligned with a center line of the ignition cylinder 4, but deviates from the center line of the ignition cylinder 4 by a certain distance, so that an exit of the first air outlet 5a is not aligned with the center line of the ignition cylinder 4, but is directed toward a part of a sidewall of the ignition cylinder 4. In this way, when the fresh air enters into the ignition cylinder 4 through the air intake pipe 5, the fresh air impacts the sidewall of the ignition cylinder 4 first, and then flows along the sidewall to form a swirling air flow, thus the fresh air and the fuel oil (or the atomized fuel oil) entering from an oil inlet 3 can be fully mixed inside the ignition cylinder 4, which facilitates combustion.

The second air outlet 5b of the air intake pipe 5 is in communication with the tubular mounting seat of the ignition plug, so as to feed a part of the fresh air into the ignition plug to mix with the fuel oil, and to provide the initial combustion mixture. Generally, the ratio of the amount (for example, by volume) of the fresh air entering from the first air outlet 5a to the amount of the fresh air entering from the second air outlet is 9:1 to 1:1, the ratio can be 8:1, 7:1, 6:1, 5:1, 4:1, 3:1 or 2:1, or an arbitrary value therebetween. By changing the amounts of the fresh air entering from the first air outlet 5a and the second air outlet 5b, a fuel-air ratio in the combustion chamber can be flexibly changed, so as to realize different combustion conditions. For example, when the diesel engine is in a parked or idling condition, the ratio can be appropriately increased, for example, may be 8:1, because the amount of exhaust gas is relatively small at this time, the gas composition in the combustion chamber is small, and a relatively small amount of fresh air will be able to maintain complete combustion of fuel oil. In comparison,when the diesel engine is in an accelerating condition or is travelling at a high speed, the amount of exhaust gas is relatively large, resulting in a large gas composition in the combustion chamber, in this case, more fresh air is required to be delivered into the ignition plug, so as to realize the complete combustion of the fuel oil. In an embodiment, the ratio adjustment is realized by a baffle piece (not shown) arranged at the second air outlet 5b in a partially fixed manner. In a case that the gas flow is relatively small,
an opening of the baffle piece is relatively small, therefore only a small amount of air flows into the ignition plug; and in a case that the gas flow increases, the opening of the baffle piece increases, a relatively large amount of air flows into the ignition plug, so as to realize the adjustment of the air ratio between the first air outlet 5a and the second air outlet 5b.

A flow divider 6 is further arranged between an outer wall of the ignition cylinder 4 and the tubular shell 1, and an annular portion of the flow divider 6 is cut equidistantly to form multiple rectangular or trapezoidal notches and outwardly curved fin-shaped portions. The fin-shaped portions bend toward the outlet end 1b of the tubular shell, and are at a 10 to 90 degrees angle with respect to a plane in which the annular portion of the flow divider lies. In a preferable embodiment, the angle may be 10 degrees, 15 degrees, 20 degrees, 25 degrees, 30 degrees, 35 degrees, 40 degrees, 45 degrees, 50 degrees, 55 degrees, 60 degrees, 65 degrees, 70 degrees, 75 degrees, 80 degrees, or 85 degrees. In a more preferable embodiment, the angle is 45 degrees.

Without restriction by any theory, the flow divider 6 turns a direction of the linear gas flow from the engine into a swirling direction, so as to increase a contact area between the gas flow and the flames, to ensure that the gas is evenly heated and to decrease a situation that the gas flow directly impacts a flow converging hood and causes turbulences accordingly.

In an embodiment, in front of the flow divider 6, a tapered flow converging hood 7 is arranged on an inner wall of the tubular shell 1, and the flow converging hood 7 extends toward the outlet end 1b and has a gradually decreasing diameter. An angle between a sidewall of the flow converging hood 7 and the sidewall of the tubular shell 1 ranges from 10 degrees to 50 degrees. In a preferable embodiment, the angle may be 10 degrees, 15 degrees, 20 degrees, 25 degrees, 30 degrees, 35 degrees, 40 degrees, 45 degrees or 50 degrees. The flow converging hood 7 converges the deflected gas flow generated by the flow divider 6 to be close to the flames, so as to achieve a good heating effect.

In another embodiment, the exhaust gas from the engine enters into the low temperature ignition device through the gas intake pipe, and is discharged through the flow divider and the flow converging hood. The air from an air pump enters through the air intake pipe, passes by the igniter and the ignition cylinder, brings the burning flames at the igniter to the flow converging hood, so as to heat the gas coming from the engine, and to be mixed with the air from the air pump to form a high temperature gas to be discharged. By providing the
flow divider and the flow converging hood, the hot gas flow generated by the combustion and the exhaust gas from the engine are mixed to form a swirling gas flow first, and then are converged slightly, so as to realize be fully mixed, which facilitates the even regeneration of the DPF, and can prevent the DPF from being broken due to uneven heating in the regeneration process, thus prolonging its service life. In addition, such even mixing also greatly improves the heat efficiency, reduces the fuel oil consumption during the regeneration process, and further realizes the effects of energy conservation and emission reduction.

In another embodiment, the low temperature heater is in communication with a housing for mounting the particulate filter. The housing includes the particulate filter located at a rear part and a mixing chamber located at a front part, the outlet end of the tubular shell is inserted into the mixing chamber; and the exhaust pipe of the diesel engine is inserted into the mixing chamber in an eccentric manner. In this way, the exhaust gas entering into the mixing chamber forms a swirling gas flow, which facilitates the fully mix between the exhaust gas and the hot gas flow generated by combustion, so that the even regeneration of the DPF is realized. In addition, an advantage of this arrangement is that the low temperature heater can form a curved cooperation rather than a straight cooperation with the exhaust pipe, which facilitates the flexible installation and improves the adaptability of the low temperature heater.

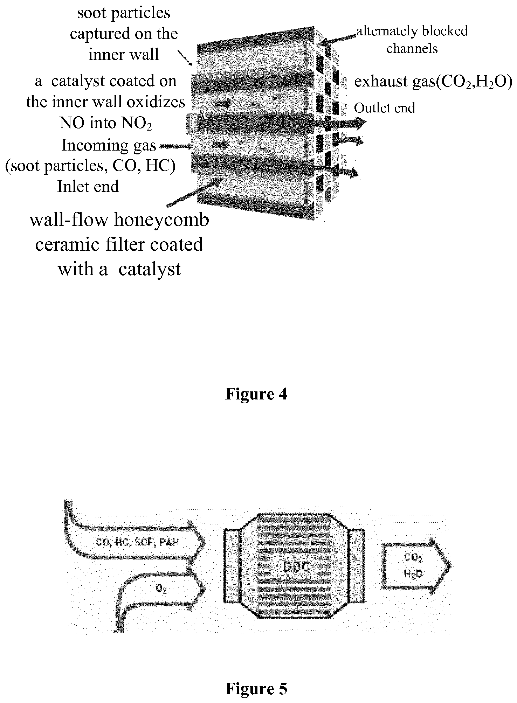

As a core part of the exhaust gas treatment system 100, the particulate filter 105, that is the DPF, may employ the wall-flow honeycomb ceramic filter commonly used in this field presently, such as the wall-flow honeycomb ceramic filter made of cordierite, silicon carbide or recrystallized silicon carbide. The advantage of the wall-flow honeycomb ceramic filter is that it can remove most of the particulate matters in the exhaust gas, such as more than 95% of the particulate matters, so that the emission can meet the most restrict requirement for particulate emissions at present. The operating principle of the wall-flow honeycomb ceramic filter is shown in Figure 4. Referring to Figure 4, particulates are trapped in the honeycomb filter with alternately blocked channels, and are removed through combustion after being accumulated to a certain amount, thereby realizing the filter regeneration.

In an embodiment, the wall-flow honeycomb ceramic filter made of recrystallized silicon carbide is especially preferable, such as "HUANGDI" brand recrystallized silicon carbide honeycomb ceramic wall-flow particulate filter (DPF). The filter captures particulates in diesel exhaust gas through porous partitions between alternately blocked honeycomb channels, and has a great capability of capturing the superfine soot nanoparticles. Besides, the filter has a large filtration area, a low pressure drop and a compact structure, and has excellent performances of heat resistance, corrosion resistance and heat conduction, and has a high mechanical strength, a good thermal shock resistance and a long service life.

The main parameters of the filter are shown in Table 1:

**Table 1: Main parameters of wall-flow honeycomb ceramic filter made of recrystallized silicon carbide**

| Technical Characteristic | Units | |
|---|---|---|
| SiC content | % | >99 |
| cells per square inch | cpsi | 200∼300 |
| side length of cell | mm | 1.20∼1.45 |
| wall thickness of cell | mm | 0.30∼0.35 |
| Porosity factor | % | 42∼60 |
| median aperture | µm | 9∼20 |
| compression strength | MPa | >13∼18 |
| thermal expansivity (40∼800°C) | 10⁻⁶ | 4.30∼4.40 |
| thermal conductivity (at 500°C) | W/mK | >14 |
| capture ratio | % | >98∼99 |
| honeycomb volume density | Kg/L | ∼0.80 |
| filtration area | m²/L | ∼0.75 |
| permeability | m² | <5.0×10-12 |
| thermal shock resistance parameter (ΔT) | °C | 250 |

The filter has been tested by Tianjin SwARC Automotive Research Laboratory Co., Ltd according to the international recognized VERT testing specification, and the result shows that the pressure drop performance meets the requirements and the average filtration efficiency reaches up to 96.5% by analyzing particulates weight. The filter is also certified by China Association of Environmental Protection Industry.

Preferably, an oxidation catalyst, that is the DOC well known in this field, is further arranged between the low temperature heater (or the turbulator) and the particulate filter. The purpose of providing the DOC is to remove the hydrocarbons and a part of the particulates in the exhaust gas. For example, the DOC used herein may be those commonly used in diesel engines presently.

The oxidation catalyst used in vehicle diesel engines employs precious metals such as platinum (Pt), palladium (Pd) and the like as catalysts, mainly for reducing the content of the soluble organic fraction (SOF) in the particulate emission, so as to reduce the particulate matter emission, and the hydrocarbons (HC) and carbon monoxide (CO) in the emission can be effectively reduced at the same time. The oxidation catalyst can remove 90% of the SOF, so that the particulate matter emission can be reduced by 40% to 50%. The treatment efficiencies of the HC and CO can reach up to 88% and 68%, respectively. The catalytic oxidation technique has a good effect in removing the SOF in the particulate emission of the diesel engine, that is, by providing the catalytic converter in the diesel engine exhaust system, the SOF is oxidized and converted to CO₂ and H₂O under the action of precious metal catalysts such as platinum, rhodium, palladium and the like or rare earth catalysts, to be removed, and the removal efficiency may usually be up to 80%. Other harmful substances in the exhaust gas such as HC and CO can also be also removed at the same time.

The conversion principal of the DOC is shown in Figure 5. For example, the exhaust gas of the diesel engine contains CO, HC, SOF, polycyclic aromatic hydrocarbons (PAH) and the like, the main products after the oxidation conversion of the DOC mainly include CO₂ and H₂O, so that the exhaust gas is partially purified.

### FIRST EMBODIMENT: REGENERATION METHOD FOR EXHAUST GAS TREATMENT SYSTEM OF DIESEL ENGINE

A regeneration method for the exhaust gas treatment system arranged on the exhaust gas piping of the diesel engine is provided according to this embodiment. The exhaust gas treatment system may be the exhaust gas treatment system in the first embodiment. Of course, the exhaust gas treatment system may also be an exhaust gas treatment system obtained by improving the exhaust gas treatment system in the first embodiment.

In an embodiment, the regeneration method includes steps 1-4:
Step 1: monitoring a differential pressure between two ends of the particulate filter in real time, and starting a regeneration procedure when a value of the differential pressure reaches a predetermined regeneration threshold value.
Step 2: injecting a predetermined amount of fuel oil into an oil storage inner sleeve, then turning on a preheating rod for preheating; and when a predetermined preheating time lapses, feeding fresh air into the air intake pipe and energizing the ceramic ignition plug at the same time, to ignite a fuel-air spray formed by the fresh air and the fuel oil, to heat the exhaust gas.
Step 3: monitoring an exhaust temperature at an inlet of the particulate filter in real time, controlling a fuel injection amount in a fuzzy prediction mode, and in a case that the exhaust temperature does not reach a predetermined regeneration temperature of the particulate filter, increasing the fuel injection amount.
Step 4: in a case that the differential pressure between the two ends of the particulate filter is reduced to a predetermined threshold value for regeneration termination, stopping preheating, stopping feeding fresh air and fuel oil, and then de-energizing the ceramic ignition plug. With this method, the carbon particulates accumulated in the DPF can be completely removed through combustion, so that the DPF can be regenerated evenly to be used to remove the particulates repeatedly. The predetermined amount of fuel oil is used to immerse a central cylindrical concave portion of the oil storage inner sleeve in which the preheating rod is inserted, so as to prevent the temperature of the preheating rod from rising too high, thus prolonging the service life of the preheating rod. For example, the predetermined amount of fuel oil can just completely immerse the central cylindrical concave portion or basically immerse the central cylindrical concave portion.

In order to facilitate the measurement of the pressure and temperatures at the two ends of the DPF, a temperature sensor, such as a thermocouple, and a pressure sensor are arranged at each of a front end and a rear end of the DPF. For example, the temperature sensors 108 and the pressure sensors 107 are shown in Figure 1. Temperature values measured by the temperature sensors 108 and pressure values measured by the pressure sensors 107 are all transmitted to a separately arranged control unit (such as an electrical control unit) as a basis for controlling.

### SECOND EMBODIMENT: COMBUSTION OF LOW TEMPERATURE HEATER UNDER AN IDLING CONDITION

The low temperature heater is arranged as shown in Figure 2, which will not be described herein. The low temperature heater is linearly installed with respect to the exhaust pipe of the engine. The engine is a diesel engine of Dongfeng Motor Corporation, with an engine displacement of 2.8 liters. The comparative example is a low temperature heater disclosed in a Chinese Patent Application No. 200780021783.1.

First, the engine is started, the low temperature heater is preheated and ignited according to a program under the conditions of idling, accelerating and travelling at a high speed, the ignition reliability of the flames under the idling condition is observed, that is, to observe whether the ignition is stable and whether a situation that the flames are blown out by the exhaust gas happens, and the results are recorded.

Next, an used particulate filter, that is a DPF (wherein a large amount of soot is accumulated, but the DPF is intact), is installed at the outlet end of the low temperature heater, and a regeneration experiment is carried out according to the program. During the experiment process, it is observed whether the combustion in the DPF is even, and multiple temperatures are recorded. It is detected whether there are cracks on the DPF after the experiment.

### THIRD EMBODIMENT: COMBUSTION OF LOW TEMPERATURE HEATER UNDER HIGH SPEED AND ACCELERATING CONDITIONS

The low temperature heater is arranged as shown in Figure 2, which will not be described herein. The low temperature heater is linearly installed with respect to the exhaust pipe of the engine. The engine is a diesel engine of Dongfeng Motor Corporation, with an engine displacement of 2.8 liters. The comparative example is a low temperature heater disclosed in a Chinese Patent Application No. 200780021783.1.

First, the engine is started, the low temperature heater is preheated and ignited according to a program under the conditions of idling, accelerating and travelling at a high speed, the ignition reliability of the flames under the idling condition is observed, that is, to observe whether the ignition is stable and whether a situation that the flames are blown out by the exhaust gas happens, and the results are recorded.

Next, a used particulate filter, that is a DPF (wherein a large amount of soot is accumulated, but the DPF is intact), is installed at the outlet end of the low temperature heater, and a regeneration experiment is carried out according to the program. During the experiment process, it is observed whether the combustion in the DPF is even, and multiple temperatures are recorded. It is detected whether there are cracks on the DPF after the experiment.

Finally, the regenerated DPF is weighed, and a soot cleaning rate is calculated based on a weight of the DPF before generation. The average value of multiple soot cleaning rates is calculated to indicate a degree of regeneration.

The results of the second embodiment and the thirdembodiment are shown in the following Table 2.

**Table 2: Results of the second embodiment and the third embodiment**

| | Present application | | | | Comparative example | | | |
|---|---|---|---|---|---|---|---|---|
| Index | Times of ignition | Homogeneity of combustion | Crack | Average soot cleaning rate (%) | Times of ignition | Homogeneity of combustion | Crack | Average soot cleaning rate (%) |
| Second Embodiment | 5/5 | homogeneous | none | 92% | 5/5 | homogeneous | none | 85% |
| Third Embodiment | 5/5 | homogeneous | none | 89% | 5/5 | -- | -- | -- |

In the second embodiment and the third embodiment, the low temperature heaters according to the present application are both ignited stably, and can stably regenerate the DPF accumulated with soot, the soot cleaning rate reaches up to 90%, which indicates that the DPF has an excellent regeneration effect, and the situations of breakages or cracks of the DPF did not happen.

Compared with the present application, in the comparative example, the average soot cleaning rate is only 85% even under the idling condition. Moreover, under the conditions of accelerating and travelling at a high speed, a very small flame is observed, and the temperature at the inlet end of the DPF is very low, and is only about 300 °C, which cannot reach the DPF regeneration temperature at all, therefore the soot cleaning rate is almost zero, that is, the low temperature heater disclosed in the comparative example cannot regenerate the DPF under this condition.

According to the above experimental data, no matter under what conditions, including the conditions of idling, accelerating and travelling at a high speed, the low temperature heater according to the present application is superior to the low temperature heater in the comparative example in terms of the ignition reliability or ignition stability, the soot cleaning rate of the DPF, and the like.

## Claims

1. An exhaust gas treatment system (100) for a diesel engine, comprising:
a low temperature heater (102) arranged downstream of an exhaust pipe of the diesel engine; and
a particulate filter (105) connected to the low temperature heater (102) and configured to capture particulate matters from engine exhaust;
**characterized in that** the low temperature heater (102) comprises:
a tubular shell (1), having an inlet end (1a) and an outlet end (1b), and the inlet end (1a) being in communication with the exhaust pipe of the diesel engine;
an ignition portion (2) arranged on a sidewall of the shell near the inlet end, and an oil inlet (3) being arranged at a center of the ignition portion (2);
an ignition cylinder (4) connected to the ignition portion (2) and in communication with the ignition portion (2), the ignition cylinder (4) having an open end (4a) and a closed end (4b), the closed end (4b) being near the inlet end (1a) of the tubular shell (1) and the open end (4a) being near the outlet end (1b) of the tubular shell (1); and
an air intake pipe (5) which passes through the tubular shell (1) and a sidewall of the ignition cylinder (4) and enters the ignition cylinder (4), and wherein the intake pipe (5) has a first air outlet (5a) and a second air outlet (5b), the first air outlet (5a) is directly inside the ignition cylinder (4), the second air outlet (5b) is in communication with the ignition portion (2), and the ignition portion (2) is located between the first air outlet (5a) and the closed end (4b);
wherein the first air outlet (5a) is inserted into the ignition cylinder (4) in an eccentric manner, and the eccentric manner refers to that a center line of the first air outlet (5a) is not aligned with a center line of the ignition cylinder (4), but deviates from the center line of the ignition cylinder (4) by a certain distance.

2. The exhaust gas treatment system (100) for the diesel engine according to claim 1, wherein a flow divider (6) is further arranged between an outer wall of the ignition cylinder (4) and the tubular shell (1), and an annular portion of the flow divider (6) is cut equidistantly to form multiple rectangular or trapezoidal notches and outwardly curved fin-shaped portions.

3. The exhaust gas treatment system (100) for the diesel engine according to claim 2, wherein the fin-shaped portions bend toward the outlet end of the tubular shell (1), and are at an angle of 10 to 90 degrees with respect to a plane on which the annular portion of the flow divider (6) lies.

4. The exhaust gas treatment system (100) for the diesel engine according to claim 3, wherein the angle is 10 degrees, 15 degrees, 20 degrees, 25 degrees, 30 degrees, 35 degrees, 40 degrees, 45 degrees, 50 degrees, 55 degrees, 60 degrees, 65 degrees, 70 degrees, 75 degrees, 80 degrees or 85 degrees.

5. The exhaust gas treatment system (100) for the diesel engine according to claim 2, wherein in front of the flow divider (6), a tapered flow converging hood (7) is arranged on an inner wall of the tubular shell (1), and the flow converging hood (7) extends toward the outlet end (1b) and has a gradually decreasing diameter.

6. The exhaust gas treatment system (100) for the diesel engine according to claim 5, wherein an angle formed between a sidewall of the flow converging hood (7) and a sidewall of the tubular shell (1) ranges from 10 degrees to 50 degrees.

7. The exhaust gas treatment system (100) for the diesel engine according to claim 6, wherein the angle is 10 degrees, 15 degrees, 20 degrees, 25 degrees, 30 degrees, 35 degrees, 40 degrees, 45 degrees or 50 degrees.

8. The exhaust gas treatment system (100) for the diesel engine according to claim 1, wherein the low temperature heater is in communication with a housing for mounting the particulate filter (105), the housing comprises the particulate filter (105) located at a rear part and a mixing chamber located at a front part, the outlet end (1b) of the tubular shell (1) is inserted into the mixing chamber; and the exhaust pipe of the diesel engine is inserted into the mixing chamber in an eccentric manner.

9. The exhaust gas treatment system (100) for the diesel engine according to claim 1, wherein an oxidation catalyst (104) is arranged between the low temperature heater (102) and the particulate filter (105), and is configured to remove hydrocarbons and a part of particulates from the exhaust gas.

10. The exhaust gas treatment system (100) for the diesel engine according to claim 9, wherein a wall-flow honeycomb ceramic filter or the oxidation catalyst (104) is made of cordierite, silicon carbide or recrystallized silicon carbide.

11. A method for regenerating an exhaust gas treatment system arranged on an exhaust piping of a diesel engine, the exhaust gas treatment system is the exhaust gas treatment system (100) according to any one of claims 1 to 10, wherein the method comprises the following steps:
monitoring a differential pressure between two ends of the particulate filter in real time by pressure sensors mounted at the two ends of the particulate filter, and starting a regeneration procedure when a value of the pressure differential reaches a predetermined regeneration threshold value;
injecting fuel oil into an oil storage inner sleeve, then turning on a preheating rod for preheating; and when a predetermined preheating time lapses, feeding fresh air into the air intake pipe and energizing a ceramic ignition plug at the same time, to ignite a fuel-air spray formed by the fresh air and the fuel oil, to heat the exhaust gas;
monitoring an exhaust temperature at the inlet of the particulate filter in real time by temperature sensors mounted at the two ends of the particulate filter, controlling a fuel injection amount in a fuzzy prediction mode, and in a case that the exhaust temperature does not reach a predetermined regeneration temperature of the particulate filter, increasing the fuel injection amount; and
in a case that the differential pressure between the two ends of the particulate filter is reduced to a predetermined threshold value for regeneration termination, stopping preheating, stopping feeding fresh air and fuel oil, and then de-energizing the ceramic ignition plug.

## Patentansprüche

1. Abgasbehandlungssystem (100) für einen Dieselmotor, aufweisend:
eine Niedertemperatur-Heizeinrichtung (102), die stromabwärts eines Abgasrohrs des Dieselmotors angeordnet ist; und
einen Partikelfilter (105), der mit der Niedertemperatur-Heizeinrichtung (102) verbunden und dazu ausgelegt ist, Feststoffteilchen aus dem Motorabgas aufzufangen;
**dadurch gekennzeichnet, dass** die Niedertemperatur-Heizeinrichtung (102) aufweist:
einen Rohrmantel (1) mit einem Einlassende (1a) und einem Auslassende (1b), wobei das Einlassende (1a) in Verbindung mit dem Abgasrohr des Dieselmotors steht;
einen Zündabschnitt (2), der an einer Seitenwand des Mantels nahe dem Einlassende angeordnet ist, und einen Öleinlass (3), der in der Mitte des Zündabschnitts (2) angeordnet ist;
einen Zündzylinder (4), der mit dem Zündabschnitt (2) verbunden ist und in Verbindung mit dem Zündabschnitt (2) steht, wobei der Zündzylinder (4) ein offenes Ende (4a) und ein geschlossenes Ende (4b) hat, wobei sich das geschlossene Ende (4b) nahe dem Einlassende (1a) des Rohrmantels (1) und das offene Ende (4a) nahe dem Auslassende (1b) des Rohrmantels (1) befindet; und
ein Luftansaugrohr (5), das durch den Rohrmantel (1) und eine Seitenwand des Zündzylinders (4) verläuft und in den Zündzylinder (4) eintritt, und wobei das Ansaugrohr (5) einen ersten Luftauslass (5a) und einen zweiten Luftauslass (5b) hat, wobei der erste Luftauslass (5a) direkt innerhalb des Zündzylinders (4) liegt, der zweite Luftauslass (5b) in Verbindung mit dem Zündabschnitt (2) steht und der Zündabschnitt (2) sich zwischen dem ersten Luftauslass (5a) und dem geschlossenen Ende (4b) befindet;
wobei der erste Luftauslass (5a) außermittig in den Zündzylinder (4) eingesetzt ist und sich "außermittig" darauf bezieht, dass eine Mittellinie des ersten Luftauslasses (5a) nicht mit einer Mittellinie des Zündzylinders (4) ausgerichtet ist, sondern von der Mittellinie des Zündzylinders (4) um einen gewissen Abstand abweicht.

2. Abgasbehandlungssystem (100) für einen Dieselmotor nach Anspruch 1, wobei darüber hinaus ein Strömungsteiler (6) zwischen einer Außenwand des Zündzylinders (4) und dem Rohrmantel (1) angeordnet ist und ein Ringabschnitt des Strömungsteilers (6) unter gleichen Abständen eingeschnitten ist, um mehrere rechteckige oder trapezförmige Einschnitte und nach außen gekrümmte, lamellenförmige Abschnitte zu bilden.

3. Abgasbehandlungssystem (100) für einen Dieselmotor nach Anspruch 2, wobei die lamellenförmigen Abschnitte zum Auslassende des Rohrmantels (1) hin gebogen sind und einen Winkel von 10 bis 90 Grad in Bezug auf einen Ebene haben, auf der der Ringabschnitt des Strömungsteilers (6) liegt.

4. Abgasbehandlungssystem (100) für einen Dieselmotor nach Anspruch 3, wobei der Winkel 10 Grad, 15 Grad, 20 Grad, 25 Grad, 30 Grad, 35 Grad, 40 Grad, 45 Grad, 50 Grad, 55 Grad, 60 Grad, 65 Grad; 70 Grad, 75 Grad, 80 Grad oder 85 Grad beträgt.

5. Abgasbehandlungssystem (100) für einen Dieselmotor nach Anspruch 2, wobei vor dem Strömungsteiler (6) eine konische Strömungskonzentrationshaube (7) an einer Innenwand des Rohrmantels (1) angeordnet ist und die Strömungskonzentrationshaube (7) sich zum Auslassende (1b) erstreckt und einen allmählich kleiner werdenden Durchmesser hat.

6. Abgasbehandlungssystem (100) für einen Dieselmotor nach Anspruch 5, wobei ein Winkel, der zwischen einer Seitenwand der Strömungskonzentrationshaube (7) und einer Seitenwand des Rohrmantels (1) gebildet ist, im Bereich zwischen 10 Grad und 50 Grad liegt.

7. Abgasbehandlungssystem (100) für einen Dieselmotor nach Anspruch 6, wobei der Winkel 10 Grad, 15 Grad, 20 Grad, 25 Grad, 30 Grad, 35 Grad, 40 Grad, 45 Grad oder 50 Grad beträgt.

8. Abgasbehandlungssystem (100) für einen Dieselmotor nach Anspruch 1, wobei die Niedertemperatur-Heizeinrichtung in Verbindung mit einem Gehäuse zum Anbringen des Partikelfilters (105) steht, wobei das Gehäuse den Partikelfilter (105), der sich an einem hinteren Teil befindet, und eine Mischkammer aufweist, die sich an einem vorderen Teil befindet, das Auslassende (1b) des Rohrmantels (1) in die Mischkammer eingesetzt ist; und das Abgasrohr des Dieselmotors außermittig in die Mischkammer eingesetzt ist.

9. Abgasbehandlungssystem (100) für einen Dieselmotor nach Anspruch 1, wobei ein Oxidationskatalysator (104) zwischen der Niedertemperatur-Heizeinrichtung (102) und dem Partikelfilter (105) angeordnet und dazu ausgelegt ist, Kohlenwasserstoffe und einen Teil der Partikel aus dem Abgas zu entfernen.

10. Abgasbehandlungssystem (100) für einen Dieselmotor nach Anspruch 9, wobei ein Wandströmungs-Keramikwabenfilter oder der Oxidationskatalysator (104) aus Cordierit, Siliziumkarbid oder rekristallisiertem Siliziumkarbid besteht.

11. Verfahren zum Regenerieren eines Abgasbehandlungssystems, das an einer Abgasrohrleitung eines Dieselmotors angeordnet ist, wobei es sich bei dem Abgasbehandlungssystem um das Abgasbehandlungssystem (100) nach einem der Ansprüche 1 bis 10 handelt, wobei das Verfahren die folgenden Schritte umfasst:
Überwachen eines Differenzdrucks zwischen zwei Enden des Partikelfilters in Echtzeit durch Drucksensoren, die an den beiden Enden des Partikelfilters angebracht sind, und Starten eines Regenerationsvorgangs, wenn ein Wert des Differenzdrucks einen vorbestimmten Regenerationsschwellenwert erreicht;
Einspritzen von Brennöl in eine Ölspeicher-Innenhülse, dann Einschalten eines Vorheizstabs zum Vorheizen; und wenn eine vorbestimmte Vorheizzeit verstrichen ist, Einleiten von Frischluft in das Luftansaugrohr und gleichzeitiges Bestromen einer Keramikzündkerze, um einen durch die Frischluft und das Brennöl gebildeten Brennstoff/Luft-Sprühstrahl zu zünden, um das Abgas zu erwärmen;
Überwachen einer Abgastemperatur am Einlass des Partikelfilters in Echtzeit durch Temperatursensoren, die an den beiden Enden des Partikelfilters angebracht sind, Steuern einer Brennstoffeinspritzmenge in einem Fuzzy-Vorhersage-Modus, und falls die Abgastemperatur keine vorbestimmte Regenerationstemperatur des Partikelfilters erreicht, Erhöhen der Brennstoffeinspritzmenge; und
falls sich der Differenzdruck zwischen den beiden Enden des Partikelfilters auf einen vorbestimmten Schwellenwert für die Regenerationsbeendigung reduziert, Stoppen des Vorheizens, Stoppen des Einleitens von Frischluft und Brennöl, und dann Abschalten der Bestromung der Keramikzündkerze.

## Revendications

1. Système de traitement de gaz d'échappement (100) pour un moteur diesel, comprenant :
un chauffage à basse température (102) agencé en aval d'un tuyau d'échappement du moteur diesel ; et
un filtre à particules (105) raccordé au chauffage à basse température (102) et configuré pour capturer des matières particulaires provenant de l'échappement de moteur ;
**caractérisé en ce que** le chauffage à basse température (102) comprend :
une enveloppe tubulaire (1) présentant une extrémité d'entrée (1a) et une extrémité de sortie (1b), l'extrémité d'entrée (1a) étant en communication avec le tuyau d'échappement du moteur diesel ;
une partie allumage (2) agencée sur une paroi latérale de l'enveloppe près de l'extrémité d'entrée, et une entrée de fioul (3) agencée à un centre de la partie allumage (2) ;
un cylindre d'allumage (4) raccordé à la partie allumage (2) et en communication avec la partie allumage (2), le cylindre d'allumage (4) présentant une extrémité ouverte (4a) et une extrémité fermée (4b), l'extrémité fermée (4b) étant proche de l'extrémité d'entrée (1a) de l'enveloppe tubulaire (1) et l'extrémité ouverte (4a) étant proche de l'extrémité de sortie (1b) de l'enveloppe tubulaire (1) ; et
un tuyau d'admission d'air (5) qui traverse l'enveloppe tubulaire (1) et une paroi latérale du cylindre d'allumage (4) et entre dans le cylindre d'allumage (4), sachant que le tuyau d'admission (5) présente une première sortie d'air (5a) et une deuxième sortie d'air (5b), la première sortie d'air (5a) est située directement à l'intérieur du cylindre d'allumage (4), la deuxième sortie d'air (5b) est en communication avec la partie allumage (2), et la partie allumage (2) est située entre la première sortie d'air (5a) et l'extrémité fermée (4b) ;
sachant que la première sortie d'air (5a) est insérée dans le cylindre d'allumage (4) de manière excentrique, et l'expression "manière excentrique" signifie qu'une ligne médiane de la première sortie d'air (5a) n'est pas alignée avec une ligne médiane du cylindre d'allumage (4), mais dévie de la ligne médiane du cylindre d'allumage (4) à raison d'une certaine distance.

2. Le système de traitement de gaz d'échappement (100) pour un moteur diesel selon la revendication 1, sachant qu'un diviseur de flux (6) est en outre agencé entre une paroi extérieure du cylindre d'allumage (4) et l'enveloppe tubulaire (1), et une partie annulaire du diviseur de flux (6) est coupée de manière équidistante pour former de multiples encoches rectangulaires ou trapézoïdales et des parties en forme d'ailettes incurvées vers l'extérieur.

3. Le système de traitement de gaz d'échappement (100) pour un moteur diesel selon la revendication 2, sachant que les parties en forme d'ailettes se courbent vers l'extrémité de sortie de l'enveloppe tubulaire (1), et décrivent un angle de 10 à 90 degrés par rapport à un plan sur lequel la partie annulaire du diviseur de flux (6) est situé.

4. Le système de traitement de gaz d'échappement (100) pour un moteur diesel selon la revendication 3, sachant que l'angle est de 10 degrés, 15 degrés, 20 degrés, 25 degrés, 30 degrés, 35 degrés, 40 degrés, 45 degrés, 50 degrés, 55 degrés, 60 degrés, 65 degrés, 70 degrés, 75 degrés, 80 degrés ou 85 degrés.

5. Le système de traitement de gaz d'échappement (100) pour un moteur diesel selon la revendication 2, sachant qu'en face du diviseur de flux (6), une hotte de convergence de flux (7) conique est agencée sur une paroi intérieure de l'enveloppe tubulaire (1), et la hotte de convergence de flux (7) s'étend vers l'extrémité de sortie (1b) et a un diamètre qui diminue graduellement.

6. Le système de traitement de gaz d'échappement (100) pour un moteur diesel selon la revendication 5, sachant qu'un angle formé entre une paroi latérale de la hotte de convergence de flux (7) et une paroi latérale de l'enveloppe tubulaire (1) est compris entre 10 degrés et 50 degrés.

7. Le système de traitement de gaz d'échappement (100) pour un moteur diesel selon la revendication 6, sachant que l'angle est de 10 degrés, 15 degrés, 20 degrés, 25 degrés, 30 degrés, 35 degrés, 40 degrés, 45 degrés ou 50 degrés.

8. Le système de traitement de gaz d'échappement (100) pour un moteur diesel selon la revendication 1, sachant que le chauffage à basse température est en communication avec un logement servant à monter le filtre à particules (105), le logement comprend le filtre à particules (105) situé au niveau d'une partie arrière et une chambre de mélange située au niveau d'une partie avant, l'extrémité de sortie (1b) de l'enveloppe tubulaire (1) est insérée dans la chambre de mélange ; et le tuyau d'échappement du moteur diesel est inséré dans la chambre de mélange de manière excentrique.

9. Le système de traitement de gaz d'échappement (100) pour un moteur diesel selon la revendication 1, sachant qu'un catalyseur à oxydation (104) est agencé entre le chauffage à basse température (102) et le filtre à particules (105), et est configuré pour enlever des hydrocarbures et une partie des particules du gaz d'échappement.

10. Le système de traitement de gaz d'échappement (100) pour un moteur diesel selon la revendication 9, sachant qu'un filtre en céramique en nid d'abeille d'écoulement en paroi ou le catalyseur à oxydation (104) est composé de cordiérite, de carbure de silicium ou de carbure de silicium recristallisé.

11. Procédé de régénération d'un système de traitement de gaz d'échappement agencé sur une tuyauterie d'échappement d'un moteur diesel, le système de traitement de gaz d'échappement étant le système de traitement de gaz d'échappement (100) selon l'une quelconque des revendications 1 à 10, sachant que le procédé comprend les étapes suivantes :
surveillance d'une pression différentielle entre deux extrémités du filtre à particules en temps réel par des capteurs de pression montés aux deux extrémités du filtre à particules, et démarrage d'une procédure de régénération lorsqu'une valeur de la pression différentielle atteint une valeur seuil de régénération prédéterminée ;
injection de fioul combustible dans un manchon intérieur de stockage de fioul, puis allumage d'une cane de préchauffage pour le préchauffage ; et lorsqu'un temps de préchauffage prédéterminé est écoulé, apport d'air frais dans le tuyau d'admission d'air et mise sous tension simultanée d'une bougie d'allumage en céramique, pour allumer un jet combustible-air formé par l'air frais et le fioul combustible, pour chauffer le gaz d'échappement ;
surveillance d'une température d'échappement à l'entrée du filtre à particules en temps réel par des capteurs de température montés aux deux extrémités du filtre à particules, régulation d'une quantité d'injection de combustible dans un mode de prédiction floue, et dans un cas où la température d'échappement n'atteint pas une température de régénération prédéterminée du filtre à particules, augmentation de la quantité d'injection de combustible ; et
dans un cas où la pression différentielle entre les deux extrémités du filtre à particules est réduite à une valeur seuil prédéterminée pour achèvement de la régénération, arrêt du préchauffage, arrêt de l'apport d'air frais et de fioul combustible, puis mise hors tension de la bougie d'allumage en céramique.
